# EUROPEAN PATENT APPLICATION

(11) **EP 0 891 114 A1**
(43) Date of publication of application: **13.01.1999**
(21) Application number: 97111904.5
(22) Date of filing: 12.07.1997
(51) Int. Cl.: H04Q 7/38, H04Q 11/04

(54) **Method and system for performing an optimised hand over**

(71) Applicant: TELEFONAKTIEBOLAGET LM ERICSSON, 126 25 Stockholm (SE)
(72) Inventor: Bautz, Gregor, 40670 Meerbusch (DE); Larsson, Mikael, 249 046 Singapore (SG)
(74) Representative: Mohsler, Gabriele

(57) **Abstract**

Method and system for performing an optimised hand over between a first base station BS1 and a second base station BS2, wherein a mobile terminal MT requests a hand over. During hand over the loss of data has to be avoided and a fast retransmission should be provided. Further the hand over is preferably under the control of the mobile terminal MT initialising the hand over. The invention therefore provides a method and a system where an information stream is divided into segments and where each segment is numbered. The numbered segments are transmitted via the first communication path P1 and via the first base station (BS1) to the mobile terminal MT and at the same time they are stored in a buffer (BF) on the second communication path P2 to the second base station (BS2), which is the one where the hand over is requested to. After the execution of the hand over one numbered segment identified by the exact number is requested via the second communication path P2. The numbered segment is then available for the mobile terminal MT and is exactly specified by the concrete number.

## Description

The present invention relates to a method and a system for performing an optimised hand over between base stations, wherein a mobile terminal which is associated to a base station or a network requests a hand over from one base station to another. The invention further relates to a use of the system in the environment of connection-oriented packet and connection-oriented cell networks, e.g. in the ATM or the WATM (Wireless ATM) environment.

There is a plurality of hand over schemes existing. One very well known environment where hand over is performed, is the GSM environment. Here the different types of hand over are classified into internal and external hand over. An internal hand over is performed without involving a MSC (Mobile-Services Switching Centre), thereby saving signalling bandwidth. The external hand over, e.g. the Inter-MSC hand over or the Inter-BSC hand over involves the transferring of hand over control from the so called anchor MSC to the new MSC, the so called relay MSC. Hand over invocations can be initiated either by the mobile or by the MSC.

During the execution of a hand over between base stations in current cellular or wireless systems, small losses of information out of the information stream may occur. Depending on the information, e.g. real time information or data information, the losses of data are more or less disturbing. The more disturbing the loss of data is, the more it should be avoided. Preferably there is no loss of data during the hand over.

In the prior art there is a method known which avoids the loss of information during hand over. The described loss-less hand over mechanism for wireless ATM must combine signalling and ATM (and lower) layer cell relay functions. In this method the information stream or data stream is segmented into two parts. The first part of the segmented data stream is sent to the 'old' base station, which is the base station where the 'old' path is established. The second part is sent via the 'new' communication path to the base station whereto the hand over should be performed. The new communication path should serve the information stream after the hand over is executed. The end of the segment is used to indicate the switching from the 'old' base station to the 'new' base station (Håkan Mitts, Harri Hansen et al; 'Lossless Hand over for Wireless ATM', Proceedings of ACM MobiCom '96).

The segmentation according to this method therefore provides a loss free hand over. However, this method doesn't give any control over the hand over procedure to the mobile terminal. But the mobile terminal does not know ahead the exact time when the hand over really occurs, and wishes to determine the exact time of the hand over, e.g. after it has emptied its buffer.

Further to this, it may be necessary to retransmit information out of the information stream to have the information available again, because some errors or even losses have occurred during the procedure. Therefore the path between the mobile terminal and the network should be as short as possible, to give the possibility of a fast retransmission. Especially for high-speed connections it is important to have the transmission path as short as possible, because a delay is not acceptable in high-speed networks and may seriously interfere with an agreed traffic contract.

Therefore it is an object of the present invention to provide a method and a system for a hand over where no loss of information occurs and where the hand over is optimised in such a way, that a fast retransmission is possible. Further it is an object of the present invention to give control over the hand over to the mobile terminal in case of initialising the hand over by the mobile terminal.

This object is reached by the method and the system having the steps and features according to claim 1 and 9. A preferred use is reached by the object of claim 11.

The invention is advantageous because it leads to a low-delay retransmission, which is especially for high-speed networks of high importance and which is necessary to provide a low delay retransmission.

Further to this, the invention allows advantageously a flexible execution of the hand over under the control of the mobile station. This leads to an optimisation of hand over protocols, e.g. for connection-oriented packet or connection-oriented cell networks.

Further preferred embodiments are achieved according to the claims 2 to 8 and 10 and 12.

The method and the system for performing an optimised hand over include the storing of the segments on the path to the second base station. Here it is advantageously according to claim 3 and claim 10 to store the segments at the second base station itself to have the path as short as possible between the storage means and the second base station. This is advantageously because of the minimisation of the delay of the retransmission.

According to claim 4 it is advantageously to request the segment with the same number as the one which was sent to the first base station at the time of hand over. This is advantageously in the case that during the hand over the quality of the link decreases that much that no transmission of the segment will be secured. In this case the receiving station may get the same segment via the second base station again to avoid missing any segment and to avoid the loss of data.

A method and a system of the present invention will be further understood and appreciated from the following detailed description taken into conjunction with the figures in which:
- Fig.1: is a block diagram illustrating an environment where the method and system can be used,
- Fig.2: is a flow chart of the inventive method according to claim 1.

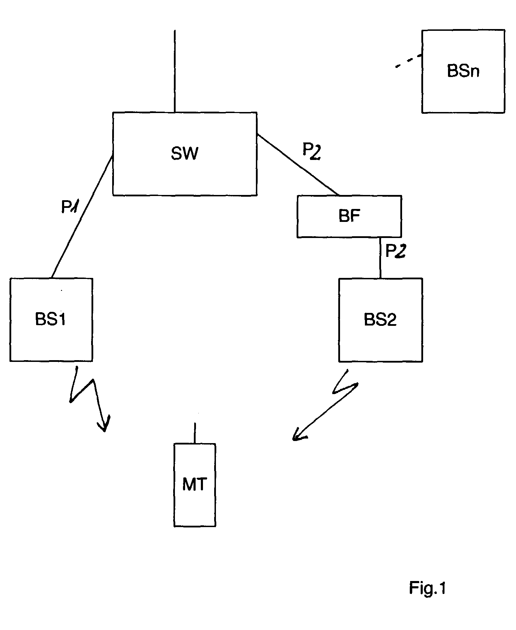

With reference to Figure 1, there is a connection-oriented packet or connection-oriented cell network shown. This may be for example an ATM (Asynchronous Transfer Mode) network or a WATM (Wireless Asynchronous Transfer Mode) network. This network consists of one or more switches SW. The switch SW at which an actual connection is re-routed is the so called anchor switch. In the example there is only one switch SW shown which is the anchor switch, but further switches may exist on the communication path from the switch SW to the first base station BS1 or the second base station BS2. Further there is a plurality of base stations BS1,BS2,...,BSn, with each base station connected via a communication path P1,P2 to one of the switches SW. In addition a storage means BF, e.g. a buffer is provided on the communication path P1,P2 between the switch SW and the base station BS1,BS2,...,BSn. In this figure due to clearness of the figure only one buffer BF is shown on only one communication path P2. Further there is a plurality of mobile terminals MT. The mobile terminals MT and the base stations BS1,BS2,...,BSn are communication with each other via radio links. In this figure there is only one mobile terminal MT shown due to clearness. A communication path between the switch SW and the mobile terminal MT is established via one of the base stations.

In this example the mobile terminal MT is associated to the first base station BS1 and requests, due to any reason, a hand over to another base station. Therefore, e.g. a request for a hand over from the first base station (BS1) to the second base station (BS2) is sent. A hand over request may also be initialised by the network due to any known reason for a hand over. After the hand over is executed and finished, information or data is sent via the second base station BS2 and the second communication path P2 to the mobile terminal MT.

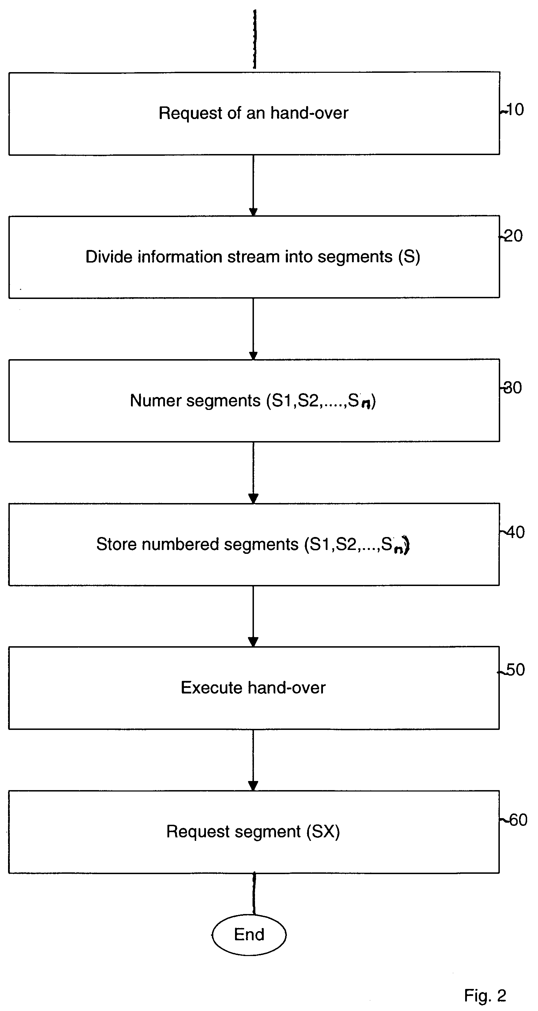

In the following the invention will be described in more detail according to figure 2 taking into account the environment according to figure 1.

The mobile terminal MT is already in communication. This means that a first communication path P1 between the mobile terminal MT and the switch SW is established via a base station. In this example the communication is established via the first base station BS1 and via the first communication path P1. This means that an information stream is sent. In a first step 10 the mobile terminal MT requests due to any reason a hand over from the first base station BS1 e.g. to the second base station BS2. There may also be the network requesting a hand over from the first base station BS1 to the second base station BS2. Resources have to be checked by the switch to make sure that the hand over can be processed. However it is not mentioned here in more detail due to the fact that there is no affect on the invention.

Upon receiving the hand over request message, the switch SW, e.g. the anchor switch starts in a next step 20 to divide the information stream into segments S. In addition the segments S are numbered -step 30- using numbers 1,2,...,n and the result is a communication stream with numbered segments S1,S2,...,Sn.

The achieved numbered segments S1,S2,...,Sn are sent to the first base station BS1 via the first communication path P1 and at the same time to the second base station BS2 via the corresponding second communication path P2. On the second communication path P2 to the second base station BS2 the segments are stored -step 40- in a storage means BF, e.g. a buffer. Preferably and to avoid delays the buffer BF is part of the second base station BS2 or is incorporated in the second base station BS2. The stored segments S1, S2,...,Sn are stored to be transmitted later to the mobile terminal MT via the second base station BS2 after the hand over is executed.

After the hand over is executed, which means that the mobile terminal MT has switched it's antenna to the second base station BS2 and is ready to receive information, e.g. data via the second base station BS2 -step 50- the mobile terminal MT is able to request the segment SX specified by an exact number X, with X=1,2,...,n -step 60-. This segment SX is the exactly specified segment the mobile terminal MT wants to receive via the second base station BS2. After the hand over is executed and the mobile terminal MT is associated to the second base station BS2, the mobile terminal requests one segment SX by explicitly signalling the corresponding number X. Then the hand over is finished.

To avoid the loss of information in the case of decreasing link quality on the link between the mobile terminal MT and the first base station BS1 after the hand over has already been initiated, the mobile terminal MT may request the same segment Y via the second base station BS2 as it was going to receive via the first base station BS1. This means that a segment Y is duplicated. It should be pointed out that this special method leads to the multiplication of cells, which is not allowed in all networks.

In the following the system for performing an optimised hand over between base stations will be described in more detail. This will be described without a specific figure, but in accordance with figure 1.

A system for performing an optimised hand over between base stations is working in the environment described according to figure 1. Further the system consists of means to establish a request for a hand over from a first base station BS1 to a second base station BS2. These means for establishing a request for a hand over include means of detecting the need of hand over, which means the detection of the need to change a cell. These means initiate the hand over when e.g. the mobile terminal MT decides that a hand over should be performed. The main criterion for hand over is the quality of transmission for the ongoing connection both up-link and down-link. There are algorithms existing and well known and described in specifications for the hand over decision which will not be described in more detail.

Further the system consists of means to divide the information stream into segments S1, S2,...,Sn and means for numbering these segments 1,2,...,n. As a connection-oriented packet or connection-oriented cell network, e.g. the ATM network, the ATM layer protocol divides an information stream into easily recognisable cells. Therefore ATM provides a natural way to segment an information stream, where the segments are consisting of a plurality of cells. To number these segments they have to be marked to make them recognisable. In the ATM environment the cell header lacks information to identify the segments. Therefore a new type of cell which contains the segment number has to be provided. This new type of cell has to be inserted by the switch SW at the end of the segment into the cell stream of a VCC (Virtual Channel Connection) increasing the segment number by 1. A VCC is known out of the ATM techniques and is characterised in that it refers to a concatenation of VC (Virtual Channel) links for achieving connection between ATM service access points. A VCC can be provided by the switching equipment.

The new type of cell, which has to be provided is e.g. a new type of resource management cell containing the sequence number information. Another type of cell is a type of operation and maintenance cell containing the number information. The division and numbering can also be provided by the use of ATM cell headers GFC (Generic Flow Control) bits to carry number information. The ATM cell is composed of 53 bytes. The first 5 bytes are for the cell-header field, and the remaining 48 byte form the user information field. The cell-header field is divided in GFC (Generic Flow Control), VPI (Virtual Path Identifier), VCI (Virtual Channel Identifier), PT (Payload Type), CLP (Cell Loss Priority) and HEC (Header Error Control) fields. The main function of the GFC header is for example the physical access control. It can also be used for traffic control etc..

Another way is performed with the use of reserved bits in AAL5 (ATM Adaptation Layer 5) packet trailer to carry the number information. For systematic and flexible information transfer, ATM prescribes a three layer-layer protocol reference model. The associated layers include the physical layer, the ATM layer and the ATM Adaptation layer (AAL). The AAL performs the function of mapping service signals into ATM cell's payload space, and the ATM layer executes the ATM cell header related functions for the transparent delivery of the ATM payload space. The AAL5 is capable of high speed processing, which is the key feature of AAL5. The AAL5 protocol has a simple header structure, and enables simple protocol processing and fast and efficient data communication.

As already described before, the segmented and numbered information stream including the new type of cell are relayed to the mobile terminal MT via the first base station BS1 and the first communication path P1. The system for performing an optimised hand over further includes storage means BF, e.g. a buffer, on the second communication path P2 to the second base station BS2, for storing the numbered segments at the same time. The storage means BF can either be a part of the second base station BS2 or can even be part of the switch SW.

Not to loose any data while hand over is executed, the system further consists of means for requesting a numbered segment SX via the second base station BS2. This means, exactly one segment specified by its number, is requested. This is done with signalling the segment number X which should be received for each VCC.

As already mentioned before a preferred use of the system and the method is the use in a connection-oriented packet or connection-oriented cell network. Preferably the use is seen in ATM or Wireless ATM (WATM) environment. The ATM environment already enables easily the segmentation and offers the right environment to provide an optimised hand over without any loss of data, with low-delay retransmission, and with order-maintaining execution. However it should be clearly pointed out that any other connection-oriented packet and cell based network may use the method and system for an optimised hand over. This may possibly be one which isn't already standardised and preferably is one which allows multiplication of cells.

## Claims

1. Method for performing an optimised hand over between base stations (BS1,BS2,...,BSn), with the steps of
- requesting an hand over from a first base station (BS1) to a second base station (BS2),
- dividing an information stream which is sent to the first base station (BS1) into segments (S1,S2,...,Sn) and numbering them,
- transmitting the segments (S1,S2,...,Sn) to the first base station (BS1) and storing the segments (S1,S2,...,Sn) on a second communication path (P2) to the second base station (BS2), and
- executing the hand over and requesting out of the stored segments (S1,S2,...,Sn) a numbered segment (SX) specified by the number (X) via the second base station (BS2).

2. Method according to claim 1, wherein
- the requested segment is requested by a mobile terminal (MT) by signaling the concrete number (X) of the segment (SX).

3. Method according to claim 1 or 2, wherein
the segments (S1,S2,...,Sn) are stored at the second base station (BS2).

4. Method according to claim 2 or 3, wherein
- the requested segment (SX) is the segment with the same number (X) as the one which was sent to the first base station (BS1) at the time of hand over.

5. Method according to one of the claims 1 to 4, wherein
- the division and numbering of the information stream is performed with the use of an ATM resource management cell containing information about the number.

6. Method according to one of the claims 1 to 4, wherein
- the division and numbering of the information stream is performed with the use of an ATM operation and maintenance cell containing information about the number.

7. Method according to one of the claims 1 to 4, wherein
- the division and numbering of the information stream is performed with the use of ATM cell headers GFC (Generic Flow Control) bits to carry information about the number.

8. Method according to one of the claims 1 to 4, wherein
- the division and numbering of the information stream is performed with the use of an AAL5 (ATM Adaptation Layer 5) packet trailer to carry user-to-user information about the number.

9. System for performing an optimised hand over between base stations (BS1,BS2,...,BSn), with
- means to initiate and establish a request for an hand over from a first base station (BS1) to a second base station (BS2),
- means to divide an information stream which is sent to the first base station (BS1) into segments (S1,S2,...,Sn) and means for numbering the segments,
- storage means (BF) for storing the segments (S1,S2,...,Sn) on a second communication path (P2) to the second base station (BS2),
- and means for requesting a numbered segment (SX) via the second base station (BS2) from the storage means (BF) on the second communication path (P2), after the hand over is executed.

10. System according to claim 9, wherein the storage means (BF) are located at the second base station (BS2).

11. Use of the system according to claim 9, wherein the system is used to perform an optimised hand over in a connection-oriented packet or a connection-oriented cell network.

12. Use according to claim 12, wherein the network is an ATM (Asynchronous Transfer Mode) or WATM (Wireless Asynchronous Transfer Mode) network.
